# FASCICULE DE BREVET EUROPEEN

(11) **EP 2 267 330 B1**
(45) Date de publication et mention de la délivrance du brevet: **29.02.2012**
(21) Numéro de dépôt: 10166707.9
(22) Date de dépôt: 21.06.2010
(51) Int. Cl.: F16D 49/04, E06B 9/72, E06B 9/84, E06B 9/90

(54) **Actionneur électrique d'entraînement d'un écran domotique**
Elektrischer Stellantrieb zum Antrieb einer haustechnischen Abschirmung
Electric actuator for driving a home automation screen

(30) Priorité: 23.06.2009 FR 0954256
(43) Date de publication de la demande: 29.12.2010
(73) Titulaire: Somfy SAS, 74300 Cluses (FR)
(72) Inventeur: Lagarde, Eric, 74700, Sallanches (FR); Menetrier, Didier, 74970, Marignier (FR)
(74) Mandataire: Myon, Gérard Jean-Pierre

(56) Documents cités:
- EP-A2- 0 976 909
- EP-A2- 1 098 063
- WO-A1-2006/059840
- FR-A1- 2 610 668

## Description

### Domaine technique :

L'invention concerne un actionneur électrique d'entraînement d'un écran domotique, de type volet roulant, store, rideau, grille, écran de projection ou porte de garage. L'actionneur selon l'invention est muni d'un frein à ressort. Ce type de frein est plus particulièrement adapté pour des moteurs tubulaires.

### Etat de la technique :

L'utilisation d'un frein à ressort hélicoïdal dans des actionneurs pour écrans domotiques est connue, notamment dans le brevet FR-B-2 610 668. Dans ce document, un ressort hélicoïdal est monté dans une pièce de friction. Au moins une spire du ressort est contrainte radialement par un alésage de la pièce de friction. Chaque extrémité du ressort forme une patte s'étendant radialement vers l'intérieur du ressort. Chaque patte peut être déplacée afin d'entraîner la rotation du ressort par rapport à son axe. La pièce d'entrée, la pièce de sortie et le ressort sont agencés spécifiquement pour obtenir la cinématique suivante : une action de la pièce d'entrée située sur un coté de la première patte entraîne la rotation du ressort dans un premier sens. Ce mouvement libère la pièce de sortie, c'est-à-dire, qu'il tend à diminuer le diamètre de l'enveloppe externe du ressort. Ainsi, le frottement entre l'alésage de la pièce de friction et les spires du ressort diminue, ce qui entraîne la diminution de la contrainte radiale entre le ressort et la pièce de friction. A l'inverse, une action de la pièce de sortie sur le coté opposé de la première patte entraîne la rotation du ressort dans le deuxième sens, c'est-à-dire, le sens opposé. Ce mouvement bloque la pièce de sortie, c'est-à-dire qu'il tend à augmenter le diamètre de l'enveloppe externe du ressort. Le frottement entre l'alésage de la pièce de friction et les spires du ressort augmente donc. Il en est de même pour la contrainte radiale entre le ressort et la pièce de friction. D'autre part, la pièce d'entrée peut également agir sur la deuxième patte du ressort afin d'entraîner la rotation du ressort selon le deuxième sens tout en libérant la pièce de sortie. Par ailleurs, la pièce de sortie peut aussi agir sur la deuxième patte du ressort afin d'entraîner la rotation du ressort selon le premier sens. Dans ce cas, la pièce de sortie se bloque ou, tout au moins, est freinée grâce au frottement du ressort contre la pièce de friction. En conséquence, la rotation de la pièce d'entrée permet la rotation du ressort et de la pièce de sortie, alors que la rotation de la pièce de sortie immobilise le ressort qui bloque le mouvement amorcé de la pièce de sortie.

Le freinage principal de la pièce de sortie est donc obtenu par frottement du ressort contre la pièce de friction. Un deuxième phénomène contribue au freinage de la pièce de sortie : Il s'agit du frottement de la pièce de sortie au niveau de son moyen de guidage. Ce frottement est directement lié au couple appliqué sur le frein. Quand un couple moteur est exercé sur la pièce d'entrée, la pièce d'entrée applique un effort sur la pièce de sortie par l'intermédiaire d'une patte du ressort. Cet effort étant dissymétrique par rapport à l'axe de la pièce de sortie, il induit un effort radial qui provoque le déplacement de la pièce de sortie jusqu'à ce qu'elle soit en appui sur son moyen de guidage. Ce contact freine la pièce de sortie. Lorsqu'un couple est exercé sur la pièce de sortie, celle-ci applique un effort sur une patte du ressort tendant à immobiliser la rotation du ressort. Par réaction à cet effort dissymétrique, un effort radial provoque le déplacement de la pièce de sortie jusqu'à ce qu'elle soit en appui sur son moyen de guidage. Ainsi, dans les conceptions classiques de frein à ressort, il existe un couple de freinage secondaire qui s'additionne au couple de freinage principal du ressort contre la pièce de friction. Ce couple de freinage secondaire s'applique lors de la montée et lors de la descente de l'écran.

Dans le brevet EP-B-0 976 909, un frein à ressort comprend une pièce d'entrée comportant deux dents, une pièce de sortie comportant également deux dents, un ressort et une pièce de friction. Le couple moteur exercé sur la pièce d'entrée est transmis à la pièce de sortie par le biais d'une dent appuyant sur une des pattes du ressort, laquelle appuie sur une dent de la pièce de sortie. L'effort exercé sur la pièce de sortie étant dissymétrique, il en résulte un effort radial appliqué à cette pièce et donc un couple de freinage secondaire. Quand on applique un couple sur la pièce de sortie, on retrouve un phénomène analogue à celui du frein de FR-B-2 610 668. Une dent de la pièce de sortie appuie sur une patte du ressort qui bloque le ressort. Par réaction à cet effort dissymétrique, un effort radial provoque le déplacement de la pièce de sortie jusqu'à ce qu'elle soit en appui sur son moyen de guidage.

Le mode de fonctionnement des conceptions classiques de frein à ressort, telles que décrit dans les exemples précédents, présente des inconvénients dans certaines configurations. En effet, lorsque l'actionneur entraîne un écran dans le sens de la descente, c'est-à-dire quand le couple de charge exercé par le poids de l'écran au niveau de la pièce de sortie est dans le même sens qu'un couple moteur de l'actionneur exercé au niveau de la pièce d'entrée, l'ajout d'un couple de freinage secondaire au couple de freinage principal est avantageux car il diminue le temps de réponse du frein, ce qui sécurise l'installation. Par contre, l'existence du couple de freinage secondaire lors de la montée de l'écran, c'est-à-dire, quand le couple de charge exercé par le poids de l'écran au niveau de la pièce de sortie est opposé à un couple moteur de l'actionneur exercé au niveau de la pièce d'entrée, est particulièrement pénalisante car le frein freine continuellement, ce qui implique un surdimensionnement du moteur. Le moteur doit non seulement soulever la charge, c'est-à-dire, exercer un couple supérieur au couple de charge, mais également compenser le couple de freinage secondaire, celui-ci s'additionnant au couple de charge.

Le brevet WO2006059840 A1 décrit un actionneur électrique d'entraînement d'un écran domotique selon le préambule de la revendication 1.

### Exposé de l'invention :

L'invention propose un actionneur électrique muni d'un frein à ressort améliorant le fonctionnement des freins précédents tout en conservant leurs bénéfices. Pour optimiser le dimensionnement du moteur, l'invention vise à supprimer le couple de freinage secondaire lors de la montée de la charge. A cet effet, l'invention concerne un actionneur électrique d'entraînement d'un écran domotique qui se déplace entre une position ouverte et une position fermée, cet actionneur étant muni d'un frein à ressort, qui comporte
- un ressort hélicoïdal dont chaque extrémité forme une patte s'étendant radialement ou axialement par rapport à un axe central du ressort,
- une pièce de friction comprenant une surface de friction sensiblement cylindrique contre laquelle appuie radialement au moins une spire du ressort hélicoïdal,
- une pièce d'entrée entrainée par le moteur électrique de l'actionneur et apte à venir en contact avec au moins une des pattes du ressort, de manière à entraîner en rotation le ressort autour d'un axe central du frein, dans un sens permettant de diminuer l'effort de contact entre le ressort hélicoïdal et la surface de friction,
- une pièce de sortie apte à être reliée à l'écran et apte à venir en contact avec au moins une des pattes du ressort de manière à entraîner en rotation le ressort autour de l'axe central du frein, dans un sens permettant d'augmenter l'effort de contact entre le ressort hélicoïdal et la surface de friction,
Dans cet actionneur, lors de la descente de l'écran, la pièce d'entrée entraîne en rotation le ressort avec diminution de l'effort de contact, au point que la pièce de sortie est libérée en rotation, sans contact direct entre la pièce d'entrée et la pièce de sortie. Selon l'invention, la pièce d'entrée comprend au moins deux surfaces de contact aptes à transmettre un couple moteur de montée de l'écran, par contact direct, à au moins deux surfaces de contact correspondantes de la pièce de sortie.

L'écran génère un couple de charge au niveau de la pièce de sortie, celui-ci permettant de produire un couple de freinage secondaire. En conséquence, cet actionneur est particulièrement adapté pour des écrans à déplacement vertical dont le poids permet de générer le couple de charge précédent. Ce peut être l'enroulement d'un tablier autour d'un tube ou le basculement d'une porte de garage entre une position horizontale et une position verticale.

La pièce d'entrée et la pièce de sortie sont en contact direct uniquement lors de la montée de l'écran. Ainsi, lors de la descente, ces deux pièces ne sont pas en contact direct pour la transmission du couple moteur. En effet, pendant cette manoeuvre, la pièce d'entrée libère le frein en agissant seulement sur une des pattes du ressort. Le couple moteur est exercé sur cette patte. Il n'y a pas d'effort transmis entre la pièce d'entrée et la pièce de sortie. La pièce de sortie est, quant à elle, retenue par l'autre patte du ressort. De ce fait, elle exerce un effort, généré par le couple de charge, uniquement sur cette patte, de manière à entraîner en rotation le ressort autour de l'axe central du frein, dans un sens permettant d'augmenter l'effort de contact entre le ressort hélicoïdal et la surface de friction.

Dans la présente description, un contact direct entre deux pièces signifie qu'une pièce agit sur l'autre soit par coopération directe de surfaces complémentaires, soit par coopération entre des surfaces complémentaires à travers une autre pièce rigide disposée entre ces surfaces, soit un mixte des coopérations précédentes. Un contact direct peut être obtenu par une ou plusieurs surfaces de contact disposées sur la pièce de sortie, une telle surface de contact étant une surface sur laquelle vient s'appuyer une surface de contact complémentaire de la pièce d'entrée ou une surface complémentaire d'une pièce intermédiaire sollicitée par la pièce d'entrée. Pour réaliser l'invention, il faut que le couple soit transmis par au moins deux surfaces de contact de la pièce de sortie.

L'équilibrage du couple moteur permettant de réduire le couple de freinage secondaire à la montée peut astucieusement être réalisé en transmettant le couple moteur via plusieurs jeux de surfaces de contact disposés, par rapport à l'axe de rotation du ressort, de manière à ce que le couple moteur soit transmis de façon sensiblement équilibrée, rendant la pièce de sortie peu contrainte radialement. En effet, ces jeux de surfaces peuvent être disposés autour de l'axe de la pièce de sortie de manière à réduire ou supprimer l'effort radial induit. Par exemple, le couple peut être transmis par deux surfaces de contact de la pièce de sortie sensiblement identiques et diamétralement opposées par rapport à l'axe de la pièce de sortie. Cette solution est simple à réaliser.

Avantageusement, le fonctionnement du frein est identique quel que soit le sens du couple moteur pour lever l'écran. Cette caractéristique permet d'obtenir un actionneur polyvalent pouvant s'installer indépendamment de la configuration de l'écran. Par exemple, pour un actionneur tubulaire s'insérant dans un tube d'enroulement, le fonctionnement de l'actionneur est identique que l'écran s'enroule dans un sens ou dans le sens inverse. Ce fonctionnement symétrique du frein permet de rationaliser la gamme et de faciliter l'installation de l'actionneur car il n'est pas besoin de distinguer si le moteur doit se monter de manière particulière par rapport à l'écran.

Selon d'autres aspects avantageux mais non obligatoires de l'invention :
- En l'absence de couple moteur, la pièce de sortie exerce sur une des pattes du ressort un effort de manière à entraîner en rotation le ressort autour de l'axe central du frein, dans un sens permettant d'augmenter l'effort de contact entre le ressort et la surface de friction.
- Au niveau d'au moins une surface de contact, le contact direct entre la pièce d'entrée et la pièce de sortie est réalisé par l'intermédiaire d'une pièce rigide, telle qu'une des pattes du ressort.
- La disposition des surfaces de contact permet d'équilibrer la transmission du couple moteur de montée, de manière à annuler ou réduire sensiblement la composante radiale, par rapport à l'axe de rotation du ressort, des efforts transmis à la pièce de sortie.
- Les deux surfaces de contact de la pièce de sortie sont diamétralement opposées par rapport à l'axe de la pièce de sortie.

On peut prévoir que la pièce de sortie soit apte à venir en contact avec une pièce ayant une cinématique différente de cette pièce de sortie, notamment une pièce solidaire de la pièce de friction ou la pièce de d'entrée, lorsqu'un effort radial est exercé sur la pièce de sortie, cet effet radial étant généré uniquement lors de la descente de l'écran.

La pièce de sortie est avantageusement apte à venir en appui contre un organe de centrage de la pièce de sortie par rapport à la pièce d'entrée sous l'effet de la composante radiale de la résultante du couple de charge exercé par l'écran, lors de la descente de l'écran.

On peut en outre prévoir que la pièce de sortie est guidée en rotation par rapport à la pièce d'entrée. La pièce d'entrée et la pièce de sortie doivent en effet être centrées les unes par rapport aux autres. La pièce d'entrée et la pièce de sortie peuvent être centrées par un arbre traversant ces pièces. L'arbre est monté serrant dans la pièce d'entrée ou la pièce de sortie et est monté glissant dans l'autre pièce, respectivement, la pièce de sortie ou la pièce d'entrée. Ce centrage est simple à réaliser et compact. Ce sous-ensemble pièce d'entrée et pièce de sortie est alors avantageusement centré par rapport à la pièce de friction. Ce centrage peut être réalisé soit par la pièce de sortie, soit par la pièce d'entrée. Préférentiellement le sous-ensemble est centré par la pièce d'entrée, car cela permet de réduire fortement les vibrations du frein.

### Description des dessins :

L'invention sera mieux comprise à la lecture de la description qui va suivre, donnée uniquement à titre d'exemple et faite en se référant aux dessins annexés sur lesquels :
- la figure 1 est une illustration schématique de l'architecture d'un actionneur tubulaire conforme à l'invention intégrant un frein à ressort conforme à l'invention ;
- la figure 2 est une vue en perspective éclatée d'un frein à ressort appartenant à l'actionneur de la figure 1 ;
- la figure 3 est une illustration schématique, en coupe transversale, du fonctionnement du frein à ressort de la figure 2 lors de la montée d'une charge ;
- la figure 4 est une illustration schématique, en coupe transversale, du fonctionnement du frein à ressort de la figure 2 lors de la descente d'une charge ;
- la figure 5 est une illustration schématique, en coupe transversale, du fonctionnement d'un frein à ressort de l'art antérieur lors de la montée d'une charge ;
- la figure 6 est une vue en perspective éclatée d'un deuxième mode de réalisation d'un frein à ressort pouvant appartenir à l'actionneur de la figure 1 ;
- la figure 7 est une vue en perspective éclatée selon un autre angle de certains éléments constitutifs du frein à ressort de la figure 6 ;
- la figure 8 est une illustration schématique, en vue de bout dans le sens de la flèche F à la figure 6 avec coupe transversale partielle, du fonctionnement du frein à ressort de la figure 6 lors de la montée d'une charge générant un couple dans le sens anti-trigonométrique sur la pièce de sortie du frein ;
- la figure 9 est une illustration schématique analogue à la figure 8, en vue de bout avec coupe transversale partielle, du fonctionnement du frein à ressort de la figure 6 lors de la descente d'une charge générant un couple dans le sens anti-trigonométrique sur la pièce de sortie du frein ;
- la figure 10 est une illustration schématique analogue à la figure 8, en vue de bout avec coupe transversale partielle, du fonctionnement du frein à ressort de la figure 6 lors de la montée d'une charge générant un couple dans le sens trigonométrique sur la pièce de sortie du frein ;
- la figure 11 est une illustration schématique analogue à la figure 8, en vue de bout avec coupe transversale partielle, du fonctionnement du frein à ressort de la figure 6 lors de la descente d'une charge générant un couple dans le sens trigonométrique sur la pièce de sortie du frein ;

### Description des modes de réalisation :

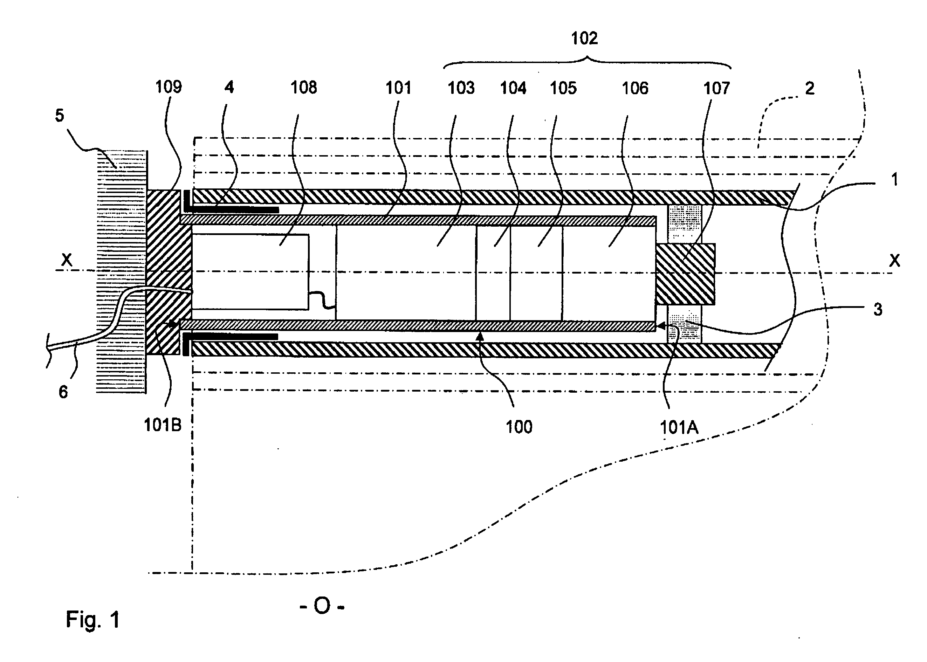

La figure 1 représente schématiquement un actionneur tubulaire rotatif 100 destiné à entraîner en rotation un tube d'enroulement 1 sur lequel peut être plus ou moins enroulé un tablier 2 d'obturation d'une ouverture O. Le tube 1 est entraîné par l'actionneur 100 en rotation autour d'un axe de révolution X-X qui est disposé horizontalement en partie haute de l'ouverture. L'ouverture O est, par exemple, une ouverture ménagée dans les parois d'un bâtiment. L'actionneur 100, le tube 1 et le tablier 2 forment alors un volet roulant motorisé.

L'actionneur 100 comprend un tube cylindrique fixe 101 dans lequel est monté un motoréducteur 102 comprenant un moteur électrique 103, un premier étage de réduction 104, un frein à ressort 105, un deuxième étage de réduction 106 et un arbre de sortie 107 qui fait saillie à une extrémité 101 A du tube 101 et entraîne une couronne-roue 3 solidaire en rotation du tube 1.

Le tube d'enroulement 1 tourne autour de l'axe X-X et du tube fixe 101 grâce à deux liaisons pivot. Une couronne-palier 4, montée sur la périphérie extérieure du tube 101 à proximité de son extrémité 101 B opposée à l'extrémité 101 A, assure la première liaison pivot. La deuxième liaison pivot est installée à l'autre extrémité du tube 1 et n'est pas représentée.

L'actionneur 100 comprend également une pièce de fixation 109, faisant saillie à l'extrémité 101 B et permettant de fixer l'actionneur 100 sur un bâti 5. Cette pièce de fixation 109 est, en outre, destinée à obturer le tube 101, ainsi qu'à supporter un module 108 de commande de l'alimentation du moteur 103. Ce module de commande est alimenté par un câble d'alimentation secteur 6.

Lors du fonctionnement de l'actionneur tubulaire 100, le motoréducteur 102 entraîne en rotation l'arbre 107 qui, à son tour, entraîne en rotation le tube 1 par l'intermédiaire de la couronne-roue 3. Par exemple, lorsque l'actionneur 100 est installé dans un caisson de volet roulant, la rotation de l'arbre 103 entraîne l'ouverture et, en alternance, la fermeture de l'ouverture O. Le tablier 2 se déplace ainsi verticalement dans l'ouverture O, entre une position haute d'ouverture et une position basse de fermeture.

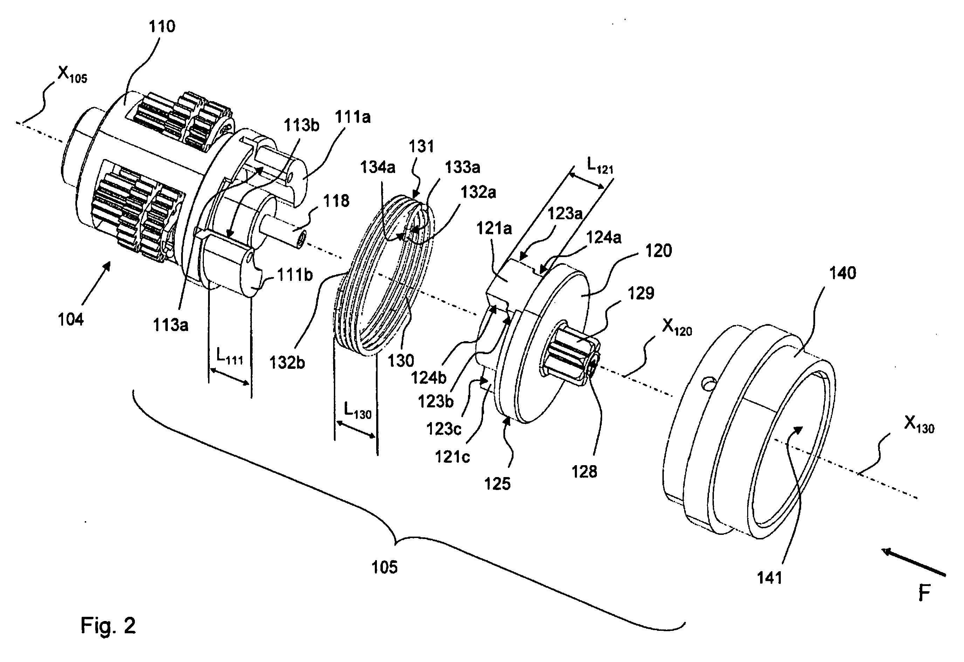

Les figures 2 à 4 illustrent plus particulièrement la structure du frein à ressort 105 selon un premier mode réalisation de l'invention. Tel que représenté à la figure 1, un rotor du moteur 103 entraîne en rotation un train épicycloïdal du premier étage de réduction 104. Le barillet 110 du train épicycloïdal, qui supporte trois satellites, forme également une pièce d'entrée du frein 105. Ce frein 105 comprend un ressort hélicoïdal 130 dont les spires sont centrées sur un axe X₁₃₀ confondu avec l'axe X-X lorsque le frein 105 est en place comme représenté à la figure 1. Ce ressort est monté serrant à l'intérieur d'un alésage 141 d'une pièce de friction 140. En d'autres termes, l'enveloppe externe 131 du ressort 130, qui est définie par les génératrices externes de ses spires, est en appui contre la surface radiale de l'alésage 141, ce qui tend à solidariser, par friction, le ressort 130 et la pièce 140.

Chaque extrémité du ressort 130 forme une patte 132a, 132b s'étendant radialement vers l'axe X₁₃₀ et vers l'intérieur du ressort, à partir de ses spires.

La pièce d'entrée 110 comprend deux protubérances ou "dents" 111a et 111b s'insérant à l'intérieur du ressort hélicoïdal 130. Chaque protubérance 111a ou 111b comprend une face 113a ou 113b apte à être en contact respectivement avec une surface 133a d'une première patte 132a formant la première extrémité du ressort ou avec une surface 133b de la deuxième patte 132b formant la deuxième extrémité du ressort. La surface 133a est disposée de manière à ce qu'une action sur celle-ci entraîne la rotation du ressort autour de l'axe X₁₃₀ dans un sens opposé au sens de rotation du ressort si l'action est exercée sur la surface 133b.

Une action par l'une des dents 111a ou 111b sur une surface 133a ou 133b tend à libérer le frein, c'est-à-dire, à déplacer l'une des pattes 132a ou 132b de manière à ce que la contrainte radiale entre l'enveloppe externe 131 du ressort hélicoïdal 130 et la surface de friction de l'alésage 141 diminue. En effet, cette action d'une des dents 111a ou 111b tend à contracter radialement le ressort 130 autour de l'axe X-X, de sorte que son enveloppe externe s'éloigne de la surface de l'alésage 141. La pièce 110 permet donc d'agir sur le ressort 130 pour diminuer l'effort de contact entre le ressort et la surface de friction de l'alésage 141. Le ressort peut alors tourner autour de l'axe X₁₃₀ qui est confondu avec l'axe central X₁₀₅ du frein 105, lui-même confondu avec l'axe X-X en configuration assemblée de l'actionneur 100 représentée à la figure 1. Une direction ou une dimension est dite "axiale" lorsqu'elle s'étend ou est mesurée parallèlement à l'axe X₁₀₅. Une direction est dite radiale lorsqu'elle est perpendiculaire et sécante à l'axe X₁₀₅.

En vis-à vis de la pièce d'entrée 110 se trouve une pièce de sortie 120 du frein 105. Celle-ci comprend deux oreilles 121a, 121c s'insérant également à l'intérieur du ressort hélicoïdal 130. L'oreille 121a est munie de deux évidements ou logements en creux 122a, 122b disposés de part et d'autre de cette oreille. Chaque évidement 122a ou 122b est destiné à recevoir une des pattes 132a, 132b du ressort et est délimité partiellement par une surface 124a, 124b apte à être en contact avec une surface 134a, 134b d'une patte 132a, 132b. Les surfaces 134a et 134b sont respectivement opposées aux surfaces 133a et 133b.

Une action sur une des surfaces 134a, 134b tend à écarter les pattes 132a et 132b, ce qui a pour effet de dilater radialement les spires du ressort 130 par rapport à l'axe X₁₃₀ et à augmenter l'effort de contact entre le ressort 130 et la surface de friction de l'alésage 141. Ceci revient à actionner le frein, c'est-à-dire, à bloquer ou à freiner fortement la rotation du ressort 130 par rapport à la pièce 140. Ainsi, la contrainte radiale entre l'enveloppe externe 131 du ressort hélicoïdal et la surface de friction 141 augmente, ce qui immobilise ou freine fortement la pièce 120 autour des axes X₁₀₅ et X₁₃₀.

Pour que le frein fonctionne, il est nécessaire d'avoir un jeu angulaire entre les dents 111a et 111b de la pièce d'entrée 110 et les pattes 132a et 132b du ressort. De même, il faut également un jeu angulaire entre l'oreille 121a et les pattes 132a et 132b du ressort. La largeur de l'oreille 121a est prévue à cet effet. De plus, la longueur axiale L₁₁₁ ou L₁₂₁ des parties 111a, 111b et 121a est légèrement supérieure à la longueur axiale L₁₃₀ du ressort.

La pièce de sortie 120 comprend également une denture 129 formant l'interface avec le deuxième étage de réduction 106.

Le centrage nécessaire de la pièce de sortie 120 par rapport à la pièce d'entrée 110 est réalisée par un arbre 118 faisant saillie axialement par rapport à la pièce d'entrée, du coté de la pièce de sortie 120. Cet arbre 118 sert de moyen de guidage à la pièce de sortie, grâce à un alésage 128 percé au centre de celle-ci.

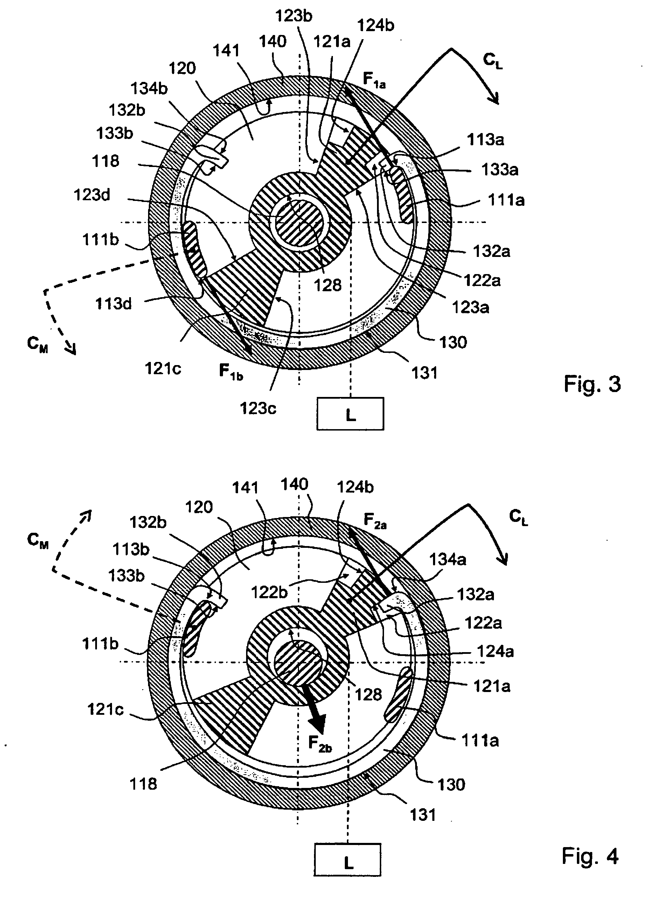

Comme il ressort plus particulièrement des figures 3 à 4, la charge L constituée par le tablier 2 peut être considérée comme solidaire de la pièce de sortie 120, à travers les éléments 1, 3, 106 et 107, ce que représente la ligne pointillée verticale sur les figures 3 à 4.

Le poids de la charge L exerce sur la pièce de sortie 120 un couple C_{L} tendant à la faire tourner autour de l'axe X₁₀₅, dans le sens anti-trigonométrique aux figures 3 et 4.

On note X₁₂₀ l'axe central de la pièce de sortie 120, lequel est confondu avec l'axe X₁₀₅ en configuration assemblée du frein.

Lors de la montée de la charge L et comme schématisé à la figure 3, la rotation dans le sens anti-trigonométrique à la figure 3 de la pièce de sortie 120, rotation qui est normalement induite par le couple C_{L}, est bloquée par la pièce d'entrée 110. La pièce d'entrée 110 est entraînée en rotation dans le sens trigonométrique à la figure 3 par un couple C_{M} généré par le moteur et pondéré par le rendement du premier étage de réduction 104. Les deux protubérances 111a et 111b de la pièce d'entrée 110 pivotent autour des axes X₁₀₅ et X-X confondus jusqu'à ce qu'une des protubérances 111a ou 111b soit en contact avec une face 123a ou 123b de l'oreille 121a de la pièce de sortie. A ce moment, l'autre protubérance 111b ou 111a entre également en contact avec une des faces 123c ou 123d de la deuxième oreille 121c de la pièce de sortie. En conséquence, le couple moteur C_{M} est transmis à la pièce de sortie par deux jeux de surfaces de contact, formées entre les faces 113a et 113d et les faces 123a et 123d diamétralement opposées par rapport à l'axe X₁₀₅ et à l'axe X₁₂₀ de la pièce de sortie, ce qui a pour effet de réduire ou supprimer la composante radiale de la résultante du couple C_{M} exercée sur la pièce de sortie 120. Le couple moteur C_{M} est en sens opposé au couple de charge C_{L}. Les faces 123a et 123d constituent les surfaces de contact de la pièce de sortie 120.

L'équilibre des forces subies par la pièce de sortie 120 est illustré à la figure 3. Le couple de charge C_{L} est équilibré par des efforts F₁ₐ et F_{1b} résultant respectivement de l'appui entre la surface 113a de la dent 111a avec la surface 123a de l'oreille 121 a et de l'appui entre la surface 113d de la dent 111 b avec la surface 123d de l'oreille 121c. Ces deux efforts F₁ₐ et F_{1b} traduisent en terme d'efforts le couple moteur C_{M} nécessaire pour vaincre le couple de charge C_{L}. Les deux efforts F₁ₐ et F_{1b} ayant sensiblement la même intensité et étant sensiblement symétriques par rapport à l'axe central X₁₂₀ de la pièce de sortie, la composante radiale de la résultante du couple C_{M} sur la pièce de sortie 120 est négligeable, voire nulle. On note que l'arbre 118 de la pièce d'entrée permettant le centrage de la pièce de sortie n'est pas en contact avec l'alésage 128 de la pièce de sortie dans cette configuration, du fait que la composante radiale de la résultante précitée est négligeable.

Pour lever la charge, le couple C_{M} doit être supérieur à la somme du couple de charge C_{L} et d'un couple de traînée du ressort frein dû au frottement résiduel entre l'enveloppe externe 131 du ressort et la surface de friction de l'alésage 141. Au démarrage, le couple C_{M} à exercer doit être plus important car, pour libérer le frein 105, il faut vaincre un effort de frottement statique. Ainsi, la protubérance 111a agit sur l'une des pattes du ressort, en l'espèce la patte 132a, logée dans l'évidement 122a, dès que l'oreille 121a est entraînée en rotation.

Lors de la descente de la charge L et comme schématisé à la figure 4, la rotation de la pièce de sortie dans le sens anti-trigonométrique sur cette figure n'est pas arrêtée par la pièce d'entrée mais par le ressort 130. Ainsi, le couple de charge C_{L} plaque l'oreille 121a contre l'une des pattes 132a ou 132b, en l'espèce la patte 132a. Ceci a pour effet de dilater radialement les spires du ressort 130 et d'activer le frein 105, comme expliqué précédemment. Le couple C_{L} exercé par l'oreille 121a sur la surface 134a de la patte 132a est pondéré par le rendement du deuxième étage de réduction 106. La patte 132a est engagée dans le logement 122a. Le couple moteur C_{M} est dans le même sens que le couple de charge C_{L}.

L'équilibre des forces de la pièce de sortie est illustré à la figure 4. Le couple de charge C_{L} est équilibré par deux efforts F₂ₐ et F_{2b}. Le premier effort F₂ₐ correspond à la réaction de la face 134a de la patte 132a du ressort 130 contre la face d'appui 124a de l'évidement 122a. Comme ce premier effort F₂ₐ ne permet pas de compenser intégralement le couple de charge C_{L}, la pièce de sortie 120 tend à se déplacer perpendiculairement à l'axe X₁₀₅, par rapport à la configuration d'appui précédente, jusqu'à ce que la pièce de sortie vienne en contact avec son moyen de guidage formé par l'arbre 118 qui est solidaire de la pièce d'entrée 110. L'alésage 128 de guidage de la pièce de sortie entre ainsi en contact avec l'arbre 118, générant alors le deuxième effort radial F_{2b} permettant d'équilibrer le couple de charge C_{L}. Ce deuxième effort F_{2b} crée une friction lors du mouvement de la charge à la descente. Cette friction freine la charge et s'ajoute au couple de freinage du ressort. Elle contribue donc à la réactivité du frein. Son temps de réponse est plus rapide que celui d'un frein pour lequel il n'y aurait pas cette friction.

On note que, pour ce mode de réalisation, la pièce d'entrée 110 est elle-même centrée par rapport à la pièce de friction 140 grâce à un voile cylindrique dont la surface enveloppe, non représentée, coopère avec l'alésage 141 de la pièce de friction. En conséquence, l'effort F_{2b} précédent induit un effort équivalent, non représenté, entre la pièce d'entrée 110 et la pièce de friction 140. Cet effort équivalent participe au couple de freinage secondaire et contribue à la réactivité du frein.

Pour permettre de descendre la charge, il faut libérer le frein. Pour cela, le couple moteur C_{M} entraîne en rotation les protubérances 111a et 111b de la pièce d'entrée 110, dont la protubérance 111b jusqu'à ce qu'elle vienne en appui sur la face 133b de la patte 132b du ressort 130. Par cette action, le ressort 130 est détendu et la pièce de sortie 120 peut tourner, grâce au couple de charge C_{L}. Les pièces 110 et 120 ne sont alors pas en contact direct.

Si le sens d'enroulement de charge est inversé, le fonctionnement est identique. Le fonctionnement du frein est ainsi symétrique, ce qui permet de faciliter son installation puisque les performances du frein sont les mêmes, quel que soit le sens du montage de l'actionneur, c'est-à-dire le sens du couple moteur C_{M} qui sert à relever l'écran 2.

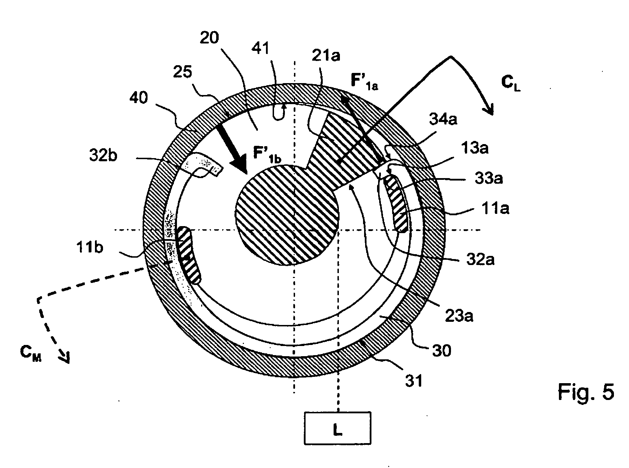

La figure 5 représente un frein à ressort classique de l'art antérieur et plus particulièrement son comportement à la montée. Les parties du frein représentées à la figure 5 qui sont analogues à celles du frein 105 portent les mêmes références diminuées de 100. Pour ce type de frein, la pièce de sortie n'est pas conçue pour équilibrer le couple de charge à la montée. La pièce de sortie 20 ne comprend qu'une oreille 21a. Lors de la montée le fonctionnement présente des similitudes avec celui du frein 105 dans la configuration de la figure 3. Le couple moteur C_{M} entraîne en rotation une protubérance 11a jusqu'à ce qu'elle entre en contact avec une face 33a d'une patte 32a du ressort 30. La face opposée 34a de la patte est, de son coté, en appui sur une face 23a de l'oreille 21a de la pièce de sortie 20 grâce au couple de charge C_{L}. En conséquence, le couple moteur C_{M} est transmis à la pièce de sortie 20 par l'intermédiaire de la patte 32a du ressort 30.

Dans le mode de réalisation selon l'invention décrit précédemment en référence aux figures 1 à 4, le couple moteur est transmis directement à la pièce de sortie 120 par un contact entre une face 113a de la pièce d'entrée 110 et une face 123a de la pièce de sortie 120, la patte du ressort étant alors escamotée dans le logement 122a prévu à cet effet. Ceci permet une meilleure transmission de couple et de moins contraindre les pièces.

Dans le frein représenté à la figure 5, la reprise du couple de charge C_{L} par une patte 32a du ressort n'est pas suffisante pour équilibrer ce couple et induit donc un effort radial sur la pièce de sortie 20. Cet effort radial provoque le déplacement de la pièce de sortie jusqu'à ce qu'elle soit en contact avec son moyen de guidage qui est réalisé par l'alésage 41 de la pièce de friction 40. La pièce de sortie 20 comprend un voile cylindrique dont la surface enveloppe 25 permet le guidage dans l'alésage 41. Ainsi, le couple de charge est équilibré, d'un coté, par un effort F'₁ₐ correspondant à l'appui de l'oreille 21a contre la patte 32a du ressort 30 et, de l'autre coté, par un effort F'_{1b} résultant de l'appui de la pièce de sortie 20 sur l'alésage 41 de la pièce de friction 40. Compte tenu que, lors de la montée, la pièce de sortie 20 a une vitesse relative par rapport à la pièce de friction 40, cet effort F'_{1b} crée une friction lors du mouvement de montée de la charge. Pour soulever la charge L, le couple moteur C_{M} doit donc être supérieur à la somme du couple de charge C_{L}, de cette friction et, au démarrage, du couple nécessaire pour libérer le frein. En conséquence, cette friction pénalise le dimensionnement du moteur puisqu'il doit être plus puissant pour pouvoir compenser la friction complémentaire résultant de l'effort F'_{1b}.

Pour la descente de la charge, le fonctionnement est analogue à celui représenté à la figure 3 pour le frein de l'invention. L'équilibre des forces est, par contre, plus semblable à celui représenté à la figure 5. La charge est freinée par le couple de freinage du ressort 30 et la friction avec le moyen de guidage formé par l'alésage 41 de la pièce de sortie.

Les figures 4 et 5 montrent deux moyens de guidages différents de la pièce de sortie 20 ou 120. Dans le premier cas, la pièce de sortie 120 est guidée par rapport à la pièce d'entrée 110. La pièce d'entrée 110 est, par ailleurs, centrée par rapport à la pièce de friction 140. Dans le deuxième cas, la pièce de sortie 20 est guidée par rapport à la pièce de friction 40 qui est fixe. Des essais ont montré que le frein 105 se comporte mieux dans le premier cas. En effet, le centrage de la pièce de sortie par rapport à la pièce d'entrée permet de réduire les vibrations du frein.

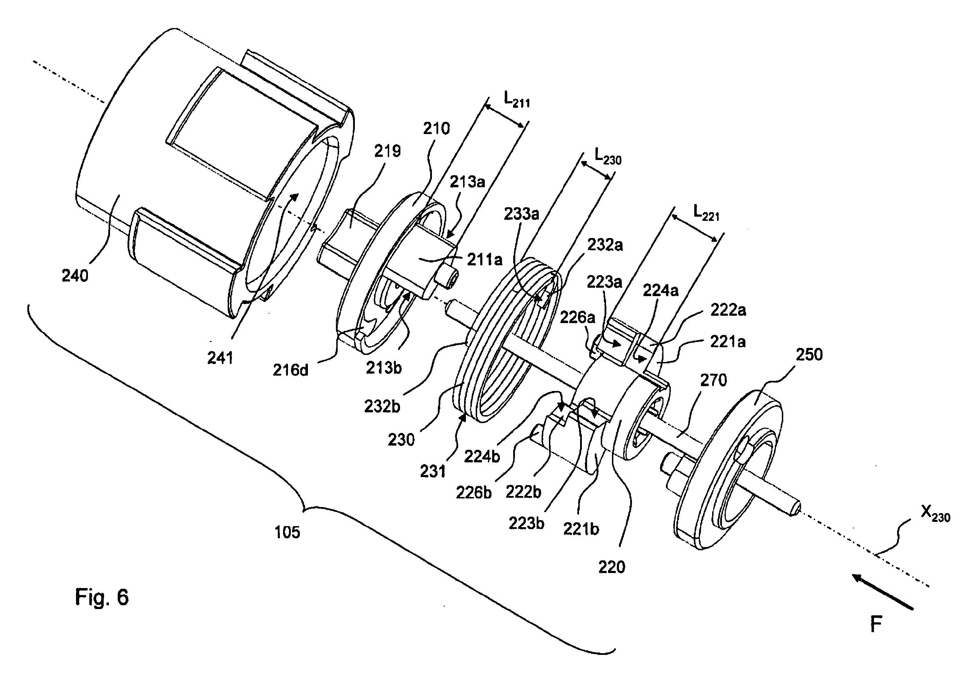

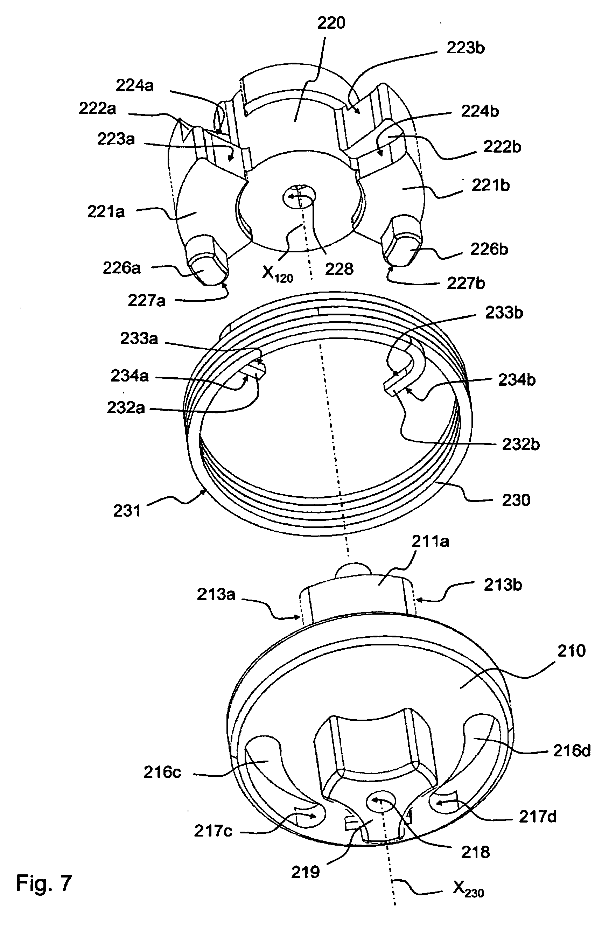

Les figures 6 à 11 illustrent un deuxième mode de réalisation du frein. Le principe de fonctionnement est proche du premier mode de réalisation. Les références de ces pièces portent des références analogues au premier mode de réalisation augmentées de 100.

La sortie du train épicycloïdal du premier étage de réduction 104 entraîne en rotation une pièce 210 formant l'entrée du frein 105. La pièce d'entrée 210 est pourvue d'un arbre polygonal 219 destiné à recevoir et transmettre un couple provenant de l'étage de réduction 104. Le frein 105 comprend un ressort hélicoïdal 230 dont les spires sont centrées sur un axe X₂₃₀ confondu avec l'axe X-X lorsque le frein 105 est en place comme représenté à la figure 1. Les axes X₂₃₀ et X-X sont confondus avec l'axe central X₁₀₅ du frein 105 en configuration assemblée d'un actionneur 100 incorporant le frein 105 de ce deuxième mode de réalisation.

Le ressort 230 est monté serrant à l'intérieur d'un alésage 241 d'une pièce de friction 240. En d'autres termes, l'enveloppe externe 231 du ressort 230, qui est définie par les génératrices externes de ses spires, est en appui contre la surface radiale de l'alésage 241, ce qui tend à solidariser, par friction, le ressort 230 et la pièce 240.

Chaque extrémité du ressort 230 forme une patte 232a, 232b s'étendant radialement vers l'axe X₂₃₀ et vers l'intérieur du ressort, à partir de ses spires.

La pièce d'entrée 210 comprend une protubérance ou "dent" 211a s'insérant à l'intérieur du ressort hélicoïdal 230, entre les pattes 232a et 232b. Cette dent 211a a deux faces 213a, 213b aptes à être respectivement en contact avec une surface 233a d'une première patte 232a formant la première extrémité du ressort et avec une surface 233b de la deuxième patte 232b formant la deuxième extrémité du ressort. La surface 233a est disposée de manière à ce qu'une action sur celle-ci entraîne la rotation du ressort autour de l'axe X₂₃₀ dans un sens opposé au sens de rotation du ressort si l'action est exercée sur la surface 233b.

Une action par la dent 211a sur une surface 233a ou 233b tend à libérer le frein, c'est-à-dire, à entraîner en rotation la patte 232a ou 232b, autour des axes X₂₃₀ et X₁₀₅, dans un sens tel que la contrainte radiale entre l'enveloppe externe 231 du ressort 230 et la surface de friction de l'alésage 241 diminue. En effet, une action de la dent 211 a sur l'une des faces 233a ou 233b tend à contracter radialement le ressort 230 autour de l'axe X-X, de sorte que son enveloppe externe s'éloigne de la surface de l'alésage 241. La pièce 210 permet donc d'agir sur le ressort 230 pour diminuer l'effort de contact entre le ressort et la surface de friction de l'alésage 241.

En vis-à vis de la pièce d'entrée 210 se trouve une pièce de sortie 220 du frein 105. Celle-ci comprend deux oreilles 221a, 221b s'insérant également à l'intérieur du ressort hélicoïdal 230. Chaque oreille est respectivement munie d'un évidement ou logement en creux 222a, 222b destiné à recevoir une des pattes 232a, 232b du ressort 230. Chaque évidement 222a, 222b est délimité partiellement par une surface 224a, 224b apte à être en contact avec une surface 234a, 234b d'une patte 232a, 232b. Les surfaces 234a et 234b sont respectivement opposées aux surfaces 233a et 233b.

Une action sur une des surfaces 234a, 234b tend à rapprocher les pattes 232a et 232b, ce qui a pour effet de dilater radialement les spires du ressort 230 par rapport à l'axe X₂₃₀ et à augmenter l'effort de contact entre l'enveloppe externe 231 du ressort 230 et la surface de friction de l'alésage 241. Ceci revient à actionner le frein, c'est-à-dire, à bloquer ou à freiner fortement la rotation du ressort 230 par rapport à la pièce 240. Ainsi, la contrainte radiale entre l'enveloppe externe 231 du ressort hélicoïdal et la surface de friction 241 augmente.

Par ailleurs, chaque oreille 221a, 221b de la pièce de sortie 220 comprend une partie en saillie 226a, 226b s'étendant axialement en direction de la pièce d'entrée et apte à se loger respectivement dans une lumière 216c, 216d, en forme de banane, de la pièce d'entrée 210, une fois le frein 105 assemblé. Ces parties en saillies 226a et 226b sont dimensionnées et disposées de manière à ce qu'une de leur face 227a, 227b soit en contact avec une face interne 217c, 217d délimitant la lumière correspondante 216c, 216d quand la face 213b, 213a de la dent 211a de la pièce d'entrée 210 est en contact avec la face 223b, 223a d'une oreille 221b, 221a de la pièce de sortie 220.

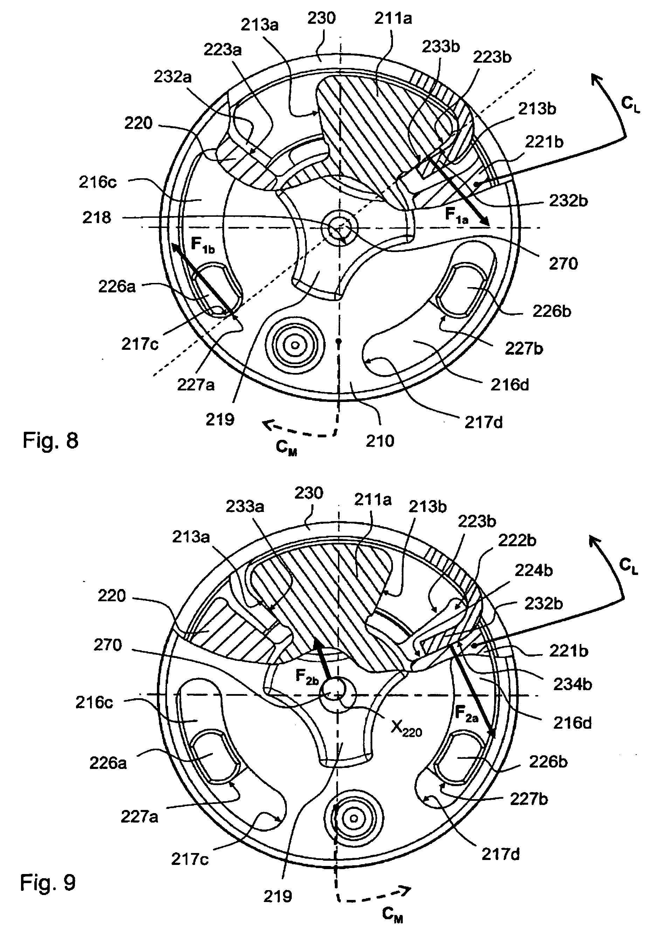

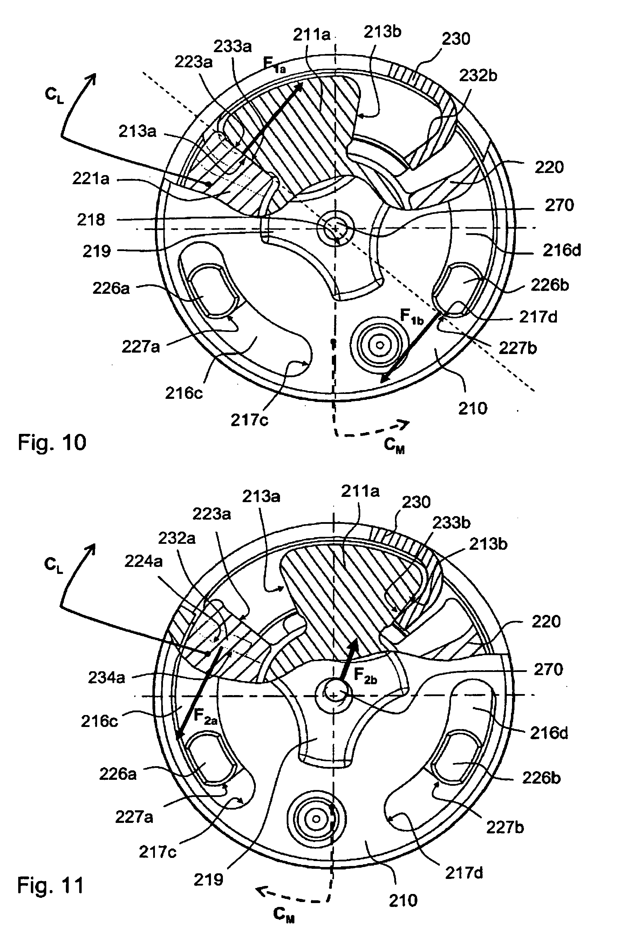

Les figures 8 et 10 illustrent les deux configurations possibles pour le frein 105. Le dimensionnement des lumières 216c, 216d est tel qu'en dehors des deux configurations précédentes, les parties en saillies 226a, 226b ne butent contre aucune surface interne d'une lumière.

Pour que le frein fonctionne, il est nécessaire d'avoir un jeu angulaire entre la dent 211a de la pièce d'entrée 210 et les pattes 232a et 232b du ressort. De même, il faut également un jeu angulaire entre les oreilles 221a et 221b et les pattes 232a et 232b du ressort. La largeur de la dent 211a est prévue à cet effet. De plus, la longueur axiale L₂₁₁ et L₂₂₁ des parties 211a, 221a et 221b est légèrement supérieure à la longueur axiale L₂₃₀ du ressort.

Le centrage nécessaire de la pièce de sortie 220 par rapport à la pièce d'entrée 210 est réalisée par un arbre 270. Celui-ci est enchâssé dans un alésage centré 218 de la pièce d'entrée 210. Une partie de l'arbre 270 fait saillie du coté de la pièce de sortie 220.

Les figures 8 à 11 illustrent le fonctionnement du frein 105. Les figures 8 et 9 correspondent à un enroulement de l'écran sur l'arbre 1 dans le sens anti-trigonométrique ou horaire sur ces figures. La figure 8 illustre la montée de la charge, alors que la figure 9 illustre sa descente. Les figures 10 et 11 correspondent à un enroulement de l'écran sur l'arbre 1 dans le sens trigonométrique ou anti-horaire sur ces figures. La figure 10 représente la montée de la charge alors que la figure 11 représente sa descente.

Dans un premier temps, le fonctionnement du frein est expliqué par rapport à la première configuration d'enroulement de l'écran, c'est-à-dire un enroulement selon le sens horaire aux figures 8 et 9.

Par défaut, le poids de la charge L exerce sur la pièce 220 un couple C_{L} qui plaque l'une des oreilles 221a ou 221b, en l'espèce l'oreille 221b, contre l'une des pattes 232a ou 232b, en l'espèce la patte 232b, comme, représenté à la figure 9. Ceci a pour effet de dilater radialement les spires du ressort 230 et d'activer le frein 105, comme expliqué précédemment. Le couple C_{L} exercé par l'oreille 221b sur la surface 234b de la patte 232b est pondéré par le rendement du deuxième étage de réduction 106. Ce couple est représenté par un vecteur associé à l'oreille 221b. La patte 232b est alors engagée dans le logement 224b.

Lors de la montée de la charge L et comme représenté à la figure 8, la pièce d'entrée 210 est entraînée en rotation par un couple C_{M} généré par le moteur et pondéré par le rendement du premier étage de réduction 104. La protubérance 211a de la pièce d'entrée tourne alors jusqu'à ce qu'elle soit en contact avec l'oreille 221b de la pièce de sortie, à l'interface entre les surfaces 213b et 223b. Pour lever la charge, le couple C_{M} doit donc être supérieur à la somme du couple C_{L} et d'un couple de traînée du ressort frein dû au frottement résiduel entre l'enveloppe externe du ressort et la surface de friction de l'alésage 241. On représente le couple C_{M} par un vecteur en pointillé associé à la pièce d'entrée.

Au démarrage, le couple C_{M} à exercer doit être plus important car, pour libérer le frein 105, il faut vaincre un effort de frottement statique. Pour libérer le frein 105, la protubérance 211a agit sur la patte 232b logée dans l'évidement 222b dès que l'oreille 221b est entraînée en rotation. La transmission du couple C_{M} moteur de la pièce d'entrée 210 à la pièce de sortie 220 est réalisée par un double contact. D'un coté, la face 213b de la protubérance 211a appuie sur la face 223b de l'oreille 221b. Et, diamétralement opposé, la face interne 217c de la lumière 216c appuie sur la face 227a de la partie en saillie 226a. Ainsi, le couple de charge C_{L} est équilibré par des efforts F₁ₐ et F_{1b} résultant des appuis entre les parties 211a et 221b, d'une part, 216c et 226a, d'autre part. Ces deux efforts ayant sensiblement la même intensité et étant sensiblement symétriques par rapport à l'axe central X₁₀₅ du frein 105 et à l'axe X₂₂₀ de la pièce de sortie, la composante radiale de la résultante du couple C_{M} sur la pièce de sortie est négligeable, voire nulle. Les faces 223b et 227a constituent les surfaces de contact de la pièce de sortie.

Lors de la descente de la charge L et comme schématisé à la figure 9, la rotation de la pièce de sortie 220 n'est pas arrêtée par la pièce d'entrée 210 mais par le ressort 230. Ainsi, le couple de charge C_{L} plaque l'oreille 221b contre l'une des pattes 232a ou 232b, en l'espèce la patte 232b. Ceci a pour effet de dilater radialement les spires du ressort 230 et d'activer le frein 105, comme expliqué précédemment.

Le couple C_{L} exercé par l'oreille 221b sur la surface 234b de la patte 232b est pondéré par le rendement du deuxième étage de réduction 106. La patte 232b est engagée dans le logement 222b. Le couple moteur C_{M} est dans le même sens que le couple de charge C_{L}. L'équilibre des forces est alors différent de celui lors de la montée. Le couple de charge C_{L} est équilibré par des efforts F₂ₐ et F_{2b}. Le premier effort F₂ₐ correspond à la réaction du ressort bloquant la charge au niveau de l'interface entre la face 234b de la patte 232b du ressort 230 et la face d'appui 224b de l'évidement 222b de l'oreille 221b de la pièce de sortie. Comme ce premier effort F₂ₐ ne permet de compenser le couple de charge C_{L}, la pièce de sortie 220 tend à pivoter par rapport à la configuration d'appui précédent jusqu'à ce que la pièce de sortie soit en contact avec son moyen de guidage formé par l'arbre 270 solidaire de la pièce d'entrée 210. L'alésage 228 de guidage de la pièce de sortie 220 par rapport à l'arbre 270 entre ainsi en contact avec l'arbre 270, générant alors le deuxième effort F_{2b} permettant d'équilibrer le couple de charge C_{L}. Cet effort est radial par rapport à l'axe X₂₂₀. Cet effort F_{2b} crée une friction lors du mouvement de la charge L à la descente. Cette friction freine la charge et s'ajoute au couple de freinage du ressort. Elle contribue donc à la réactivité du frein. Son temps de réponse est plus rapide que celui d'un frein pour lequel il n'y aurait pas cette friction.

On note que, pour ce mode de réalisation, la pièce d'entrée 210 est elle-même centrée par rapport à la pièce de friction 240 grâce à un voile cylindrique dont la surface enveloppe, non représentée, coopère avec l'alésage 241 de la pièce de friction. En conséquence, l'effort F_{2b} précédent induit alors un effort équivalent non représenté entre la pièce d'entrée 210 et la pièce de friction 240. Cet effort équivalent participe au couple de freinage secondaire contribuant à la réactivité du frein.

Pour permettre de descendre la charge, il faut libérer le frein. Pour cela, le couple moteur C_{M} entraîne en rotation une protubérance 211a de la pièce d'entrée jusqu'à ce qu'elle vienne en appui sur la face 233a de la patte 232a du ressort 230. Par cette action, le ressort 230 est détendu et la pièce de sortie 220 peut tourner, grâce au couple de charge C_{L}, les pièces 210 et 220 n'étant alors pas en contact direct.

Le fonctionnement du frein selon la deuxième configuration d'enroulement est illustré sur les figures 10 et 11.

A la montée et comme représenté à la figure 10, le couple de charge C_{L} est équilibré par les efforts F₁ₐ et F_{1b} résultant d'une part, du contact entre la face 213a de la dent 211a et la face 223a de l'oreille 221a et, d'autre part, du contact entre la face interne 217d de la lumière 216d et la face 227b de la partie en saillie 226b. Ces efforts F₁ₐ et F₂ₐ étant équilibrés, la composante radiale de la résultante du couple C_{M} sur la pièce de sortie 220 est négligeable. Le moteur doit ainsi fournir un couple moteur supérieur au couple de charge C_{L} auquel s'ajoute uniquement le couple de traîné du frein, qui résulte du frottement entre le ressort 230 et la pièce de friction 240. Il y a peu ou pas de couple de freinage secondaire généré par le frottement entre la pièce de sortie 220 et son arbre de guidage 270. Les faces 223a et 227b constituent les surfaces de contact de la pièce de sortie.

Lors de la descente, le couple de charge C_{L} est équilibré par les efforts F₂ₐ et F_{2b}. Le premier effort F₂ₐ correspond à la réaction du ressort 230 bloquant la charge L au niveau de l'interface entre la face 234a de la patte 232a du ressort 230 et la face d'appui 224a de l'évidement 222a de l'oreille 221a. Le deuxième effort F_{2b} correspond à un effort localisé au niveau de l'arbre de guidage 270 de la pièce de sortie 220, alors que les pièces 210 et 220 ne sont pas en contact direct. Cette friction génère un effort radial freinant la charge. Ainsi, le frein réagit rapidement puisque le couple de freinage secondaire ne devient plus négligeable.

Les deux modes de réalisation décrivent un ressort frein dont les extrémités sont repliées vers l'intérieur du ressort. Bien entendu, ces extrémités peuvent être repliées vers l'extérieur. Une autre variante consiste à plier les extrémités parallèlement à l'axe central du ressort. Ces pattes s'étendent alors axialement de part et d'autre du ressort, en s'éloignant du centre du ressort.

En outre, le frein à ressort ne doit pas spécifiquement être logé entre deux étages de réduction. Il peut être disposé à la sortie du moteur ou à la sortie du réducteur.

## Revendications

1. Actionneur électrique (100) d'entraînement d'un écran domotique (2) se déplaçant entre une position ouverte et une position fermée, cet actionneur étant muni d'un frein (105) à ressort, ledit frein comportant
- un ressort hélicoïdal (130;230) dont chaque extrémité forme une patte (132a,132b;232a,232b) s'étendant radialement ou axialement par rapport à un axe central (X₁₃₀;X₂₃₀) du ressort,
- une pièce de friction (140;240) comprenant une surface de friction (141;241 ) sensiblement cylindrique contre laquelle appuie radialement au moins une spire du ressort hélicoïdal,
- une pièce d'entrée (110;210), entraînée par un moteur électrique (103) de l'actionneur et apte à venir en contact avec au moins une des pattes (132a,132b;232a,232b) du ressort, de manière à entraîner en rotation le ressort autour d'un axe central (X₁₀₅) du frein, dans un sens permettant de diminuer l'effort de contact entre le ressort hélicoïdal et la surface de friction,
- une pièce de sortie (120;220) apte à être reliée à l'écran (2) et apte à venir en contact avec au moins une des pattes (132a,132b;232a,232b) du ressort de manière à entraîner en rotation le ressort autour de l'axe central (X₁₀₅) du frein, dans un sens permettant d'augmenter l'effort de contact entre le ressort hélicoïdal et la surface de friction,
dans lequel, lors de la descente de l'écran, la pièce d'entrée (110;210) entraîne en rotation le ressort (130;230) avec diminution de l'effort de contact, au point que la pièce de sortie (120;220) est libérée en rotation, sans contact direct entre la pièce d'entrée et la pièce de sortie,
**caractérisé en ce que**, la pièce d'entrée (110;210) comprend au moins deux surfaces de contact (113a,113d ;213b,217c) aptes à transmettre un couple moteur (C_{M}) de montée de l'écran (2), par contact direct, à au moins deux surfaces de contact correspondantes (123a,123c ;223b,227a) de la pièce de sortie (120;220).

2. Actionneur selon la revendication 1, **caractérisé en ce que** le comportement du frein (105) est identique, quel que soit le sens du couple moteur (C_{M}) pour lever l'écran (2).

3. Actionneur selon l'une des revendications précédentes, **caractérisé en ce qu'**en absence de couple moteur, la pièce de sortie (120;220) exerce sur une des pattes (132a,232b) du ressort (130;230) un effort de manière à entraîner en rotation le ressort autour de l'axe central (X₁₀₅) du frein, dans un sens permettant d'augmenter l'effort de contact entre le ressort et la surface de friction (141 ;241).

4. Actionneur selon l'une des revendications précédentes, **caractérisé en ce que**, au niveau d'au moins une surface de contact, le contact direct entre la pièce d'entrée (110;210) et la pièce de sortie (120;220) est réalisé par l'intermédiaire d'une pièce rigide, telle qu'une des pattes (132a,132b ;232a,232b) du ressort (130 ;230).

5. Actionneur selon l'une des revendications précédentes, **caractérisé en ce que** la disposition des surfaces de contact (113a,113d,123a,123d ;213b,223b, 217c,227a) permet d'équilibrer la transmission du couple moteur de montée (C_{M}), de manière à annuler ou réduire sensiblement la composante radiale, par rapport à l'axe (X₁₀₅) de rotation du ressort (130;230), des efforts transmis à la pièce de sortie (120;220).

6. Actionneur selon l'une des revendications précédentes, **caractérisé en ce que** les deux surfaces de contact (123a,123d; 223b,227a) de la pièce de sortie (120;220) sont diamétralement opposées par rapport à l'axe (X₁₂₀;X₂₂₀) de la pièce de sortie.

7. Actionneur électrique selon l'une des revendications précédentes **caractérisé en ce que** la pièce de sortie (120;220) est apte à venir en contact avec une pièce (118;270) ayant une cinématique différente de celle de la pièce de sortie, notamment une pièce solidaire de la pièce de friction (140;240) ou la pièce de d'entrée (110;210), lorsqu'un effort radial est exercé sur la pièce de sortie, cet effort radial étant généré uniquement lors de la descente de l'écran (2).

8. Actionneur électrique selon l'une des revendications précédentes **caractérisé en ce que** la pièce de sortie (120;220) est apte à venir en appui contre un organe de centrage (118;270) de la pièce de sortie par rapport à la pièce d'entrée (110;210) sous l'effet de la composante radiale de la résultante du couple de charge (C_{L}) exercé par l'écran (2), lors de la descente de l'écran (2).

9. Actionneur électrique selon l'une des revendications précédentes **caractérisé en ce que** la pièce de sortie (120;220) est guidée en rotation par rapport à la pièce d'entrée (110;210).

10. Actionneur électrique selon l'une des revendications précédentes **caractérisé en ce que** le sous-ensemble formé de la pièce d'entrée (110;210) et la pièce de sortie (120;220) est centrée par rapport à la pièce de friction (140;240).

## Claims

1. An electric actuator (100) for driving a home-automation screen (2) mounted to move between an open position and a closed position, said actuator being provided with a spring brake (105), said brake comprising:
- a helical spring (130; 230), each end of which forms a respective tab (132a, 132b; 232a, 232b) extending radially or axially relative to a central axis (X₁₃₀; X₂₃₀) of the spring;
- a friction part (140; 240) having a substantially cylindrical friction surface (141; 241) against which at least one turn of the helical spring bears radially;
- an inlet part (110; 210) driven by an electric motor (103) of the actuator, and suitable for coming into contact with at least one of the tabs (132a, 132b; 232a, 232b) of the spring, in such a manner as to drive the spring in rotation about a central axis (X₁₀₅) of the brake, in a direction making it possible to reduce the contact force between the helical spring and the friction surface; and
- an outlet part (120; 220) suitable for being connected to the screen (2) and suitable for coming into contact with at least one of the tabs (132a, 132b; 232a, 232b) of the spring in such a manner as to drive the spring in rotation about the central axis (X₁₀₅) of the brake, in a direction making it possible to increase the contact force between the helical spring and the friction surface;
in which actuator, while the screen is being lowered, the inlet part (110; 210) drives the spring (130; 230) in rotation with the contact force being decreased to the extent that the outlet part (120; 220) is released in rotation, without direct contact between the inlet part and the outlet part;
**characterized in that** the inlet part (110; 210) has at least two contact surfaces (113a, 113d; 213b, 217c) adapted to transmit a drive torque (C_{M}) for raising the screen (2), by direct contact, to at least two corresponding contact surfaces (123a, 123c; 223b, 227a) of the outlet part (120; 220).

2. An actuator according to claim 1, **characterized in that** the behavior of the brake (105) is identical, regardless of the direction of the drive torque (C_{M}) for raising the screen (2).

3. An actuator according to one of the previous claims, **characterized in that**, in the absence of drive torque, the outlet part (120; 220) exerts a force one of the tabs (132a, 232b) of the spring (130; 230) in such a manner as to drive the spring in rotation about the central axis (X₁₀₅) of the brake, in a direction making it possible to increase the contact force between the spring and the friction surface (141; 241).

4. An actuator according to one of the previous claims, **characterized in that**, at at least one contact surface, the direct contact between the inlet part (110; 210) and the outlet part (120; 220) is achieved by means of a rigid part such as one of the tabs (132a, 132b; 232a, 232b) of the spring (130; 230).

5. An actuator according to one of the previous claims, **characterized in that** the configuration of the contact surfaces (113a, 113d, 123a, 123d; 213b, 223b, 217c, 227a) makes it possible to balance the transmission of the raising drive torque (C_{M}), in such a manner as to eliminate or significantly reduce the radial component, relative to the axis (X₁₀₅) of rotation of the spring (130; 230), of the forces transmitted to the outlet part (120; 220).

6. An actuator according to one of the previous claims, **characterized in that** the two contact surfaces (123a, 123d; 223b, 227a) of the outlet part (120; 220) are diametrically opposite each other about the axis (X₁₂₀, X₂₂₀) of the outlet part.

7. An electric actuator according to one of the previous claims, **characterized in that** the outlet part (120; 220) is suitable for coming into contact with a part (118; 270) having dynamic behavior different from the that of the outlet part, in particular a part secured to or integral with the friction part (140; 240) or the inlet part (110; 210), when a radial force is exerted on the outlet part, said radial force being generated only while the screen (2) is being lowered.

8. An electric actuator according to one of the previous claims, **characterized in that** the outlet part (120; 220) is suitable for coming to bear against a centering member (118; 270) for centering the outlet part relative to the inlet part (110; 210) under the effect of the radial component of the resultant of the load torque (C_{L}) exerted by the screen (2), while the screen (2) is being lowered.

9. An electric actuator according to one of the previous claims, **characterized in that** the outlet part (120; 220) is guided in rotation relative to the inlet part (110; 210).

10. An electric actuator according to one of the previous claims, **characterized in that** the sub-assembly formed by the inlet part (110; 210) and by the outlet part (120; 220) is centered relative to the friction part (140; 240).

## Patentansprüche

1. Elektrischer Stellantrieb (100) zum Antrieb einer haustechnischen Abschirmung (2), die sich zwischen einer offenen Stellung und einer geschlossenen Stellung verstellt, wobei dieser Stellantrieb mit einer Federbremse (105) versehen ist, wobei die Bremse Folgendes umfasst:
- eine Schraubenfeder (130, 230), von der jedes Ende eine Lasche (132a, 132b; 232a, 232b) bildet, die sich radial oder axial in Bezug auf eine Mittelachse (X₁₃₀; X₂₃₀) der Feder erstreckt,
- ein Reibungsteil (140; 240), das eine im Wesentlichen zylindrische Reibungsfläche (141; 241) umfasst, gegen die mindestens eine Windung der Schraubenfeder radial aufliegt,
- ein Eingangsteil (110; 210), das durch einen Elektromotor (103) des Stellantriebs angetrieben wird und dazu geeignet ist, derart mit mindestens einer der Laschen (132a, 132b: 232a, 232b) der Feder in Kontakt zu gelangen, dass die Feder um eine Mittelachse (X₁₀₅) der Bremse drehend in eine Richtung angetrieben wird, die das Vermindern der Kontaktkraft zwischen der Schraubenfeder und der Reibungsfläche ermöglicht,
- ein Ausgangsteil (120; 220), das dazu geeignet ist, mit der Abschirmung (2) verbunden zu werden, und dazu geeignet ist, derart mit mindestens einer der Laschen (132a, 132b; 232a, 232b) der Feder in Kontakt zu gelangen, dass die Feder um die Mittelachse (X₁₀₅) der Bremse drehend in eine Richtung angetrieben wird, die das Erhöhen der Kontaktkraft zwischen der Schraubenfeder und der Reibungsfläche ermöglicht,
wobei das Eingangsteil (110, 210) beim Herablassen der Abschirmung die Feder (130, 230) mit Verminderung der Kontaktkraft dermaßen drehend antreibt, dass das Ausgangsteil (120; 220) ohne direkten Kontakt zwischen dem Eingangsteil und dem Ausgangsteil drehend abgekuppelt wird,
**dadurch gekennzeichnet, dass** das Eingangsteil (110; 210) mindestens zwei Kontaktflächen (113a, 113d; 213b, 217c) umfasst, die dazu geeignet sind, ein Motordrehmoment (C_{M}) zum Hochziehen der Abschirmung (2) durch direkten Kontakt auf mindestens zwei entsprechende Kontaktflächen (123a, 123c, 223b, 227a) des Ausgangsteils (120; 220) zu übertragen.

2. Stellantrieb nach Anspruch 1, **dadurch gekennzeichnet, dass** das Verhalten der Bremse (105) unabhängig von der Richtung des Motordrehmoments (C_{M}) zum Hochziehen der Abschirmung (2) identisch ist.

3. Stellantrieb nach einem der vorhergehenden Ansprüche, **dadurch gekennzeichnet, dass** beim Nichtvorhandensein eines Motordrehmoments das Ausgangsteil (120; 220) derart eine Kraft auf eine der Laschen (132a, 232b) der Feder (130; 230) ausübt, dass die Feder drehend um die Mittelachse (X₁₀₅) der Bremse in eine Richtung angetrieben wird, die die Erhöhung der Kontaktkraft zwischen der Feder und der Reibungsfläche (141; 241) ermöglicht.

4. Stellantrieb nach einem der vorhergehenden Ansprüche, **dadurch gekennzeichnet, dass** der direkte Kontakt zwischen dem Eingangsteil (110; 210) und dem Ausgangsteil (120; 220) auf der Ebene von mindestens einer Kontaktfläche mittels eines starren Teils, wie zum Beispiel einer der Laschen (132a, 132b; 232a, 232b) der Feder (130; 230) ausgeführt wird.

5. Stellantrieb nach einem der vorhergehenden Ansprüche, **dadurch gekennzeichnet, dass** die Anordnung der Kontaktflächen (113a, 113d, 123a, 123d; 213b, 223b, 217c, 227a) das Ausgleichen der Übertragung des Drehmoments zum Hochziehen (C_{M}) ermöglicht, derart, dass die Radialkomponente der auf das Ausgangsteil (120; 220) übertragenen Kräfte in Bezug auf die Drehachse (X₁₀₅) der Feder (130; 230) aufgehoben oder deutlich verringert wird.

6. Stellantrieb nach einem der vorhergehenden Ansprüche, **dadurch gekennzeichnet, dass** die zwei Kontaktflächen (123a, 123d; 223b, 227a) des Ausgangsteils (120; 220) einander in Bezug auf die Achse (X₁₂₀; X₂₂₀) des Ausgangsteils diametral entgegengesetzt sind.

7. Elektrischer Stellantrieb nach einem der vorhergehenden Ansprüche, **dadurch gekennzeichnet, dass** das Ausgangsteil (120; 220) geeignet ist, mit einem Teil (118; 270) in Kontakt zu gelangen, das eine unterschiedliche Kinematik aufweist als diejenige des Ausgangsteils, insbesondere einem Teil, das fest mit dem Reibungsteil (140; 240) oder dem Eingangsteil (110; 210) verbunden ist, wenn eine radiale Kraft auf das Ausgangsteil ausgeübt wird, wobei diese radiale Kraft nur beim Herablassen der Abschirmung (2) erzeugt wird.

8. Elektrischer Stellantrieb nach einem der vorhergehenden Ansprüche, **dadurch gekennzeichnet, dass** das Ausgangsteil (120; 220) dazu geeignet ist, unter der Wirkung der Radialkomponente der Resultierenden des beim Herablassen der Abschirmung (2) durch die Abschirmung (2) ausgeübten Lastdrehmoments (C_{L}) gegen ein Zentriermittel (118; 270) des Ausgangsteils in Bezug auf das Eingangsteil (110; 210) in Auflage zu kommen.

9. Elektrischer Stellantrieb nach einem der vorhergehenden Ansprüche, **dadurch gekennzeichnet, dass** das Ausgangsteil (120; 220) in Bezug auf das Eingangsteil (110; 210) drehend geführt wird.

10. Elektrischer Stellantrieb nach einem der vorhergehenden Ansprüche, **dadurch gekennzeichnet, dass** die Unterbaugruppe, die aus dem Eingangsteil (110; 210) und dem Ausgangsteil (120; 220) gebildet ist, in Bezug auf das Reibungsteil (140; 240) zentriert ist.
